# EUROPEAN PATENT APPLICATION

(11) **EP 2 267 055 A1**
(43) Date of publication of application: **29.12.2010**
(21) Application number: 09726242.2
(22) Date of filing: 27.03.2009
(51) Int. Cl.: C08G 63/90, C08J 3/00, C08L 101/16

(54) **METHOD FOR PURIFYING POLYMER AND PROCESS FOR PRODUCING POLYMER USING THE METHOD**

(30) Priority: 28.03.2008 JP 2008087274
(71) Applicant: JMS Co., Ltd., Hiroshima-shi Hiroshima 730-8652 (JP)
(72) Inventor: IDE, Junichi, Hiroshima-shi Hiroshima 730-8652 (JP); YAMAMOTO, Takashi, Hiroshima-shi Hiroshima 730-8652 (JP); UCHIMURA, Fumiko, Bolingbrook Illinois 60490 (US)
(74) Representative: Woods, Geoffrey Corlett
(86) International application number: PCT/JP2009/056347
(87) International publication number: WO 2009/119825

(57) **Abstract**

The present invention provides a method for purifying a polymer, by which a reduction in molecular weight of the polymer can be suppressed, and a residual catalyst in the polymer can be reduced effectively. The polymer containing the residual catalyst is brought into contact with an organic solvent containing an organic acid that has a pKa in the range of 2 to 3.9. Thus, the catalyst remaining in the polymer can be reduced, and the polymer can be purified. The organic acid can be, for example, lactic acid.

## Description

### Technical Field

The present invention relates to a method for purifying a polymer in which a catalyst used in a polymerization reaction remains, and a method for producing a polymer using the same.

### Background Art

In recent years, in a medical field such as a regenerative medicine, it is proposed that a synthesized polymer that is absorbed in a biological body, such as a copolymer of lactic acid and caprolactone, is utilized as, for example, a scaffold of culture cells

The synthesized polymer generally is synthesized by a polymerization reaction in the presence of a catalyst. Therefore, there is a case that the catalyst used in the polymerization reaction remains in the synthesized polymer. A metal such as tin or a compound containing the metal is used as the catalyst. Some catalysts exert an influence upon human bodies and the environment depending on the type of the catalysts. Particularly, there is an apprehension that polymers used in a medical field such as mentioned above exert an influence upon human bodies. Therefore, reducing the amount of a catalyst that remains in a synthesized polymer is an important subject.

Hence, for example, methods in which a synthesized polymer is brought into contact with an aqueous solvent, an organic solvent containing sulfuric acid, or the like (see Patent Documents 1 and 2) have been reported as a method for reducing the amount of a residual catalyst in a synthesized polymer.

Patent Document 1: Japanese Patent No. 3184680
Patent Document 2: Japanese Patent No. 3622327

### Brief Summary of the Invention

However, in the conventional method using an aqueous solvent, there is a problem that a catalyst cannot be removed sufficiently. Further, the present inventors have recognized that, in the case where an organic solvent containing an acid such as hydrochloric acid, nitric acid, or sulfuric acid is used, even though, for example, the catalyst can be removed sufficiently, the molecular weight of the polymer is significantly reduced by the removal.

Hence, the present invention is intended to provide a method for purifying a polymer, by which a reduction in molecular weight of the polymer can be suppressed, and a residual catalyst in the polymer can be reduced effectively.

The method for purifying a polymer of the present invention is a method for purifying a polymer containing a residual catalyst, including the step of: removing a catalyst by bringing the polymer into contact with a catalyst removal solvent containing an organic solvent that contains an organic acid, wherein the organic acid has a pKa in a range of 2 to 3.9.

The method for producing a polymer of the present invention includes the method for purifying a polymer of the present invention.

According to the purifying method of the present invention, a reduction in molecular weight of a polymer can be suppressed, and a residual catalyst in the polymer can be reduced effectively. Thus, influences upon human bodies and the environment can be suppressed, and especially, the safety of polymers used in a medical field can be improved sufficiently. Conventionally, since reducing a residual catalyst has been difficult, a polymerization reaction has had to be carried out using a catalyst in the smallest possible amount in a step of synthesizing a polymer. Therefore, for example, there has been a problem that the polymerization reaction takes a long time. However, since a residual catalyst can be reduced sufficiently according to the present invention, the amount of a residual catalyst in a polymer (hereinafter also referred to as a "crude polymer") to be subjected to a purifying treatment is not particularly limited. Therefore, the amount of a catalyst to be used in the synthesizing step also is not limited, and the time for the polymerization reaction can be shortened considerably. Thus, according to the present invention, a residual catalyst can be reduced while avoiding the problem of a reduction in molecular weight as mentioned above. Further, the limitation on a catalyst condition in the step of synthesizing a polymer can be made less stringent by the establishment of the purifying method of the present invention.

### Detailed Description of the Invention

The present invention is, as mentioned above, a method for purifying a polymer containing a residual catalyst, including the step of: removing a catalyst by bringing the polymer into contact with a catalyst removal solvent containing an organic acid, wherein the organic acid has a pKa in a range of 2 to 3.9. The catalyst remaining in the polymer is eluted in the catalyst removal solvent by bringing the polymer into contact with the solvent such as above, whereby the residual catalyst can be removed. It is to be noted that the present invention is not limited to this mechanism.

In the present invention, an organic acid to be used is not particularly limited as long as the organic acid has a pKa in the range of 2 to 3.9. Further, those skilled in the art can list specific substances of the organic acid satisfying the above-described pKa based on the common general technical knowledge. The organic acid preferably is α-hydroxy monocarboxylic acid, and specific examples thereof include lactic acid (pKa = 3.64) and glycolic acid (pKa = 3.65). Other than these organic acids, examples of the organic acid include pyruvic acid (pKa = 2.34), citric acid (pKa = 2.9), and malic acid (pKa = 3.23). Among these organic acids, lactic acid is particularly preferable. These organic acids may be used alone or in a combination of two or more of them.

In the present invention, a method for bringing the polymer into contact with the catalyst is not particularly limited. Specifically, the method can be, for example, a method in which the polymer is immersed in the solvent. In this case, the immersion of the polymer may be carried out in the state where the solvent is allowed to stand still, or may be carried out while stirring the solvent. Further, the contacting method can be, for example, a method in which the solvent is caused to flow through a column filled with the polymer. In this case, the solvent may be circulated in the column.

In the present invention, the polymer means a polymer synthesized by a polymerization reaction. In the present invention, a polymer to be treated is not at all limited. The present invention preferably is applied to a polymer (hereinafter also referred to as a "crude polymer") in which impurities remain. Preferably, the present invention is applied to a polymer in which a catalyst remains because the present invention is intended to remove a residual catalyst used for a polymerization reaction as mentioned above. Particularly preferably, the present invention is applied to a polymer in which the presence of a residual catalyst is seen as a problem. Examples of the polymer include polymers used in biological bodies such as biodegradable polymers (bioabsorbable polymers) and polymers used in the state of being in contact with biological bodies.

Examples of the catalyst include metals and metal compounds. Examples of the metal include tin, zinc, titanium, zirconium, antimony, and iron. Since tin, metal compounds containing tin, and the like among the catalysts cause a problem when they remain in a polymer as mentioned above, the present invention preferably is applied to polymers containing such catalysts.

The amount of a residual catalyst in a polymer (a crude polymer) to be subjected to a purifying treatment is not particularly limited as mentioned above. According to the present invention, even in the polymer containing a residual catalyst of about 1000 ppm by weight, the residual catalyst can be reduced up to, for example, 10 ppm by weight or less, preferably 5 ppm by weight or less.

The polymer may be a homopolymer composed of one type of monomer, or may be a copolymer composed of two or more types of monomers. A type of the polymerization reaction is not at all limited, and may be any of: a chain polymerization, a sequential polymerization or a living polymerization; a condensation polymerization or an addition polymerization; a radical polymerization, an ion polymerization, or a combination polymerization; a ring-opening polymerization, and the like. A polymerization form of the copolymer also is not at all limited, and may be any of a random copolymer, an alternation copolymer, a block copolymer, a graft copolymer, and the like.

As a specific example, the polymer can be, for example, polyester, and as a specific example, polyester can be, for example, a polymer obtained from a raw material such as L-lactide, D-lactide, D,L-lactide, ε-caprolactone, γ-butyrolactone, δ-valerolactone, glycolic acid, trimethylene carbonate, or p-dioxanone. Examples of the polymer include homopolymers synthesized from any of these monomers and copolymers of these homopolymers. The polymer may contain any one of the monomers or two or more of them.

The polymer is, for example, a biodegradable polymer, and preferably is a copolymer of lactic acid and caprolactone (hereinafter referred to as a "P(LA/CL)"). A P(LA/CL) generally can be synthesized by carrying out copolymerization using lactide (a cyclic dimer of lactic acid) and caprolactone as starting raw materials in the presence of a catalyst. The P(LA/CL) can be synthesized also by synthesizing lactide from lactic acid and carrying out copolymerization of the lactide and caprolactone in the presence of a catalyst in the same manner as above. In this synthesis of a P(LA/CL), tin, zinc, titanium, zirconium, antimony, iron, or the like generally is used as the catalyst. When such a catalyst remains at a high concentration, there is a possibility that a problem of safety arises particularly at the time when a P(LA/CL) is used as a medical material. Therefore, the purifying method of the present invention preferably is applied for purification of especially a P(LA/CL) that is useful as a medical material.

As the lactide, L-lactide, D-lactide, or a mixture thereof (D, L-lactide) can be used, for example. As the lactic acid, L-lactic acid, D-lactic acid, or a mixture thereof (D,L-lactic acid) can be used, for example. Examples of the caprolactone include ε-caprolactone, γ-caprolactone, and δ-caprolactone

The molecular weight of the P(LA/CL) is not particularly limited, and can be decided as appropriate depending on the use thereof. For example, when a P(LA/CL) is adapted so as to be degraded in a biological body after a lapse of predetermined period of time, the molecular weight can be decided as appropriate depending of the length of the predetermined period of time. When, as described above, a P(LA/CL) is used in a biological body, a weight average molecular weight generally is in the range of 1×10⁴ to 1×10⁶, preferably in the range of 1×10⁵ to 6×10⁵.

In the present invention, in the case where the polymer to be treated is a P(LA/CL), an organic acid in the catalyst removal solvent is, for example, preferably lactic acid or glycolic acid, particularly preferably lactic acid.

It is only necessary that the catalyst removal solvent of the present invention contains the organic acid, and the type of the solvent is not particularly limited. Examples of the solvent include organic solvents and aqueous solvents, or mixed solvents thereof. Among them, the solvent preferably contains the organic solvent. The solvent containing an organic solvent may be composed of only the organic solvent, or may further contain an aqueous solvent and the like. The volume percent of the organic solvent in the mixed solvent is, for example, 70% or more, preferably 95% or more, and more preferably 100%.

The type of the organic solvent is not particularly limited, and a solvent that does not allow a P(LA/CL) to be dissolved therein in the catalyst-removing step is preferable. The organic solvent is not particularly limited, and examples thereof include alcohols such as isopropyl alcohol (IPA), ethanol, methanol, and butanol, ethyl acetate, diethyl ether, methyl-t-butyl ether, acetone, methyl ethyl ketone, hexane, and heptane. These organic solvents may be used alone or in a combination of two or more of them. The aqueous solvent can be, for example, water.

The concentration of the organic acid in the catalyst removal solvent is not particularly limited, and is, for example, preferably in the range of 0.5 to 4 mol/L, more preferably in the range of 1 to 4 mol/L, and yet more preferably in the range of 2 to 4 mol/L. In the present invention, by, for example, setting the concentration of the organic acid in the catalyst removal solvent to be relatively high, the residual catalyst can be removed efficiently in a relatively short time. Further, even in the case where the concentration of the organic acid in the catalyst removal solvent is set to be relatively low, by, for example, setting the treatment temperature in the catalyst-removing step to be relatively high as will be mentioned later, the residual catalyst can be removed efficiently in a relatively short time.

Next, the purifying method of the present invention will be described with reference to an example. It is to be noted that the present invention is not limited to this.

First, the polymer is immersed in the above-mentioned catalyst removal solvent. The ratio (v/w) of the solvent (volume) to the polymer (weight) is not particularly limited, and is, for example, 2 or more, preferably 5 or more, and more preferably 10 or more.

The polymer preferably is particulate because purifying efficiency can be improved, for example. The particle diameter of the polymer particle is not particularly limited, and is more preferably 1 mm or less.

In this catalyst-removing step, the lower limit of the treatment temperature is, for example, preferably 35°C or more, more preferably 40°C or more. The upper limit thereof is, for example, 55°C or less, preferably 50°C or less. As specific examples, the treatment temperature is, for example, in the range of 35°C to 55°C, more preferably in the range of 35°C to 50°C, and yet more preferably in the range of 40°C to 50°C. In the present invention, by, for example, setting the treatment temperature to be relatively high, the residual catalyst can be removed in a relatively short time. Even in the case where the treatment temperature is set to be relatively low, by setting the ratio of the organic acid to the catalyst removal solvent to be relatively high, the residual catalyst can be removed in a relatively short time.

The treatment time in the catalyst-removing step is not particularly limited, and can be, for example, decided as appropriate depending on the ratio of the organic acid to the solvent, the treatment temperature, and the like. As specific examples, the treatment time is, for example, in the range of 0.5 to 24 hours, preferably in the range of 2 to 6 hours. The solvent is, for example, preferably exchanged with a fresh one as appropriate because efficiency to remove a catalyst can be improved.

Specific examples of conditions in the catalyst-removing step will be described below. However, they are merely examples, and do not limit the present invention. In the case where the concentration of an organic acid in the catalyst removal solvent is set to 2.4 mol/L, for example, the ratio (v/w) of the solvent to the polymer is 10 or more, the treatment temperature is in the range of 35°C to 55°C (for example, in the range of 35°C to 50°C), and the treatment time is in the range of 1 to 24 hours, and preferably, the ratio of the same is 10, the treatment temperature is 40°C, and the treatment time is in the range of 2 to 6 hours.

A remaining solvent may be removed from the polymer subjected to the catalyst-removing treatment. A removing method is not particularly limited, and examples thereof include filtration, centrifugation, and drying under reduced pressure. Among the methods, drying under reduced pressure is preferable because the solvent can be removed sufficiently.

By carrying out the catalyst-removing treatment such as above, a polymer in which a residual catalyst is reduced can be obtained. The amount of a residual catalyst in a polymer that is finally obtained can be decided as appropriate depending on, for example, the use of the polymer. Specifically, in the case of the polymer that is used in a medical field such as the above-mentioned P(LA/CL), the amount of the residual catalyst (for example, the amount of residual tin) is, for example, preferably 20 ppm by weight or less, more preferably 10 ppm by weight or less, and particularly preferably 5 ppm by weight or less. According to the present invention, the amount of a residual catalyst can be reduced sufficiently to these levels. Further, as mentioned above, it has been concerned that even though a residual catalyst can be removed sufficiently by the conventional method, the molecular weight of the polymer is reduced significantly with the removal. However, according to the present invention, the reduction in amount of a residual catalyst can be realized in the state where the reduction in molecular weight of the polymer is suppressed sufficiently. Specifically, the decreasing ratio of the molecular weight is, for example, preferably 30% or less, more preferably 20% or less, and particularly preferably 10% or less. According to the present invention, the amount of a residual catalyst can be reduced to the above-described levels while retaining the decreasing ratio of the molecular weight in these levels.

Further, the purifying method of the present invention further may include a monomer-removing step for removing a monomer that remains in the polymer, for example. In a polymerization reaction for synthesizing a polymer, there is a case where a part of a monomer as a raw material is not polymerized and remains in a synthesized polymer. On the other hand, in the case where, for example, the formed body of polymer is used in a biological body or in the state of being in contact with a biological body for medical care, a possibility of side effects caused by the residual monomer such as inflammations and allergies is suggested. Therefore, by carrying out the removal of the monomer as a raw material in addition to the catalyst-removing step as mentioned above, a polymer having further superior safety can be provided.

Means for removing the monomer are not particularly limited, and can be a method in which a polymer further is brought into contact with a solvent containing an organic solvent. This monomer-removing step can be carried out prior to the catalyst-removing step. The monomer-removing step preferably is carried out with respect to a polymer after being subjected to the catalyst-removing step. The contacting method is not particularly limited as mentioned above, and can be, for example, achieved by immersing the polymer in the solvent. The solvent hereinafter also is referred to as a "monomer removal solvent" because the monomer as a raw material remaining in a polymer can be removed by bringing the solvent into contact with a polymer, for example.

The monomer removal solvent may be composed of only an organic solvent, or further may contain an aqueous solvent and the like. The volume percent of the organic solvent to the monomer removal solvent is, for example, 70% or more, preferably 95% or more, and more preferably 100%. Preferably, the monomer removal solvent is different from the catalyst removal solvent, and do not contain acids such as organic acids as mentioned above, inorganic acids, and the like.

The organic solvent is not particularly limited, and examples thereof include various alcohols such as isopropyl alcohol, ethanol, methanol, butanol, hexanol, and octanol and ethers such as diethyl ether, and t-butyl methyl ether as mentioned above. These organic solvents may be used alone or in a combination of two or more of them. Further, the aqueous solvent can be, for example, water.

The ratio (v/w) of the solvent (volume) to the polymer (weight) is not particularly limited, and is, for example, 2 or more, preferably 5 or more, and more preferably 10 or more.

In this monomer-removing step, the treatment temperature is not particularly limited, and is, for example, preferably in the range of 25°C to 60°C, more preferably in the range of 40°C to 60°C, and particularly preferably 60°C. In the present invention, by, for example, setting the treatment temperature in the monomer-removing step to be relatively high, a residual monomer can be removed efficiently in a relatively short time.

The treatment time in the monomer-removing step is not particularly limited, and can be set as appropriate depending on the treatment temperature and the like, for example. The monomer removal solvent is, for example, preferably exchanged with a fresh one as appropriate because efficiency to remove a monomer as a raw material can be improved.

Further, after the catalyst-removing step, a step of removing an organic acid contained in the catalyst removal solvent from the polymer (hereinafter also referred to as "organic acid-removing step") further may be included prior to the monomer-removing step. The removal of an organic acid from the polymer may be achieved by bringing the polymer after being subjected to the catalyst-removing step into contact with a solvent, for example. A contacting method is not particularly limited as mentioned above. The type of the solvent is not particularly limited, and the same solvents as those described as examples of the monomer-removing solvent can be used, for example. The weight-volume ratio of the solvent to the polymer, the treatment temperature, and the like also are not particularly limited, and the step can be carried out in the same manner as in the catalyst-removing step except that the solvent does not contain acids such as organic acids and inorganic acids, for example. The treatment time also is not particularly limited, and is, for example, in the range of 0.5 to 2 hours, preferably 1 hour. The organic acid-removing step is optional, and the organic acid contained in the catalyst removal solvent can be removed also in the monomer-removing step, for example.

Next, the method for producing a polymer of the present invention includes the purifying method of the present invention. For example, a point of the present invention is that a residual catalyst in a polymer obtained by a polymerization reaction is reduced by the purifying method of the present invention, and the other steps and conditions are not at all limited.

Further, since a residual catalyst is reduced by the purifying method of the present invention, a residual catalyst amount in a crude polymer obtained by a polymerization reaction is not at all limited. Thus, the amount of a catalyst to be used in the polymerization reaction that is carried out prior to purification is not at all limited.

Hereinafter, the present invention will be described in more detail with reference to examples. However, the present invention is not limited to these examples.

### Examples

A purifying treatment was carried out by immersing a P(LA/CL) in IPA containing an organic acid, and a change in amount of residual tin over time and a change in molecular weight over time were examined. In the examples, an evaluation was carried out by setting an intended value of a final amount of residual tin to 5 ppm by weight or less and a final retention ratio of a molecular weight to 80% or more. It is to be noted that these set values do not limit the present invention.

### (Quantitative determination of residual tin)

A P(LA/CL) was degraded by a wet ashing method using sulfuric acid and nitric acid. The residual tin in this degraded product was measured using an ICP emission spectrophotometer. In this way, a quantitative determination of residual tin was carried out (hereinafter the same applies).

### (Measurement of weight average molecular weight)

A P(LA/CL) was dissolved in chloroform, and the weight average molecular weight was measured by standard polystyrene conversion using a GPC (gel permeation chromatography, mobile phase: chloroform) (hereinafter the same applies).

### [Example 1]

Regarding a catalyst removing treatment using a catalyst removal solvent that contains lactic acid, the correlation of the change in amount of residual tin and molecular weight with an immersing temperature and an immersing time was examined.

### (1) Immersing temperature

A raw material molar ratio (A: B) between lactic acid (A) and caprolactone (B) was set to 60 : 40, and a P(LA/CL) was prepared using the raw materials. The amount of residual tin in the P(LA/CL) was about 77 ppm by weight, and the molecular weight (Mw) of the P(LA/CL) was 77,000. This P(LA/CL) was processed into particles having a particle diameter of about 1 mm by grinding. 3g of this particulate P(LA/CL) was introduced into 30 mL of a catalyst removal solvent, and then the resultant mixture was stirred for 1 hour at each of predetermined temperatures. IPA containing 2.4 mol/L lactic acid was used as the catalyst removal solvent. The ratio (v/w) of the solvent to the P(LA/CL) was 10. The particulate P(LA/CL) after being subjected to the immersion was dried under reduced pressure for 12 hours at 70°C so as to remove the solvent in the P(LA/CL). The purified P(LA/CL) thus obtained was subjected to a quantitative determination of residual tin and a measurement of molecular weight. As to the tin, the ratio (residual ratio) % thereof was determined assuming that an amount of residual tin in an unpurified P(LA/CL) was 100% (hereinafter the same). As to the molecular weight, the retention ratio thereof (100 × Mw/Mw0 %) was determined assuming that the molecular weight (Mw0) of an unpurified P(LA/CL) was 100% (hereinafter the same). These results will be shown in Table 1 below.

**[Table 1]**

| | Temperature (°C) | | | | | |
|---|---|---|---|---|---|---|
| | 25 | 30 | 35 | 40 | 50 | 55 |
| Molecular weight-retention ratio (%) | 102 | 103 | 101 | 93 | 92 | 92 |
| Tin residual ratio (%) | 48 | 46 | 25 | 17 | 4 | 2 |

As shown in Table 1 above, it was found out that the residual tin can be removed with significantly superior efficiency especially by setting the treatment temperature to 35°C or more.

### (2) Concentration of lactic acid and immersing time

A raw material molar ratio (A : B) between lactic acid (A) and caprolactone (B) was set to 65 : 35, and a P(LA/CL) was prepared using the raw materials. The amount of the residual catalyst in the P(LA/CL) was 20 ppm by mol (an amount of residual tin was 19.05 ppm by weight), and the molecular weight (Mw) of the P(LA/CL) was 379,000. A purifying treatment was carried out in the same manner as mentioned above except that this P(LA/CL) was used, concentrations of lactic acid were set to predetermined concentrations (1.2, 2.4, and 3.6 mol/L), and the immersing times were set to treatment times (2, 6, 12, and 24 hours). These results will be shown in Table 2 below.

**[Table 2]**

| Concentration of lactic acid (mol/L) | Immersing time (hour) | Residual tin | | Molecular weight | |
|---|---|---|---|---|---|
| | | Tin amount (ppm by weight) | Residual ratio (%) | Mw (× 10³) | Retention ratio (%) |
| Unpurified | 0 | 19.1 | 100 | 379 | 100 |
| 1.2 | 2 | 11.5 | 61 | 400 | 106 |
| | 6 | 6.79 | 36 | 395 | 104 |
| | 12 | 4.58 | 24 | 380 | 100 |
| | 24 | 2.60 | 14 | 335 | 88 |
| 2.4 | 2 | 4.54 | 24 | 368 | 97 |
| | 6 | 1.16 | 6 | 342 | 90 |
| | 12 | 1.16 | 6 | 280 | 74 |
| | 24 | 0.31 | 2 | 217 | 57 |
| 3.6 | 2 | 2.08 | 11 | 353 | 93 |
| | 6 | 0.45 | 2 | 290 | 77 |
| | 12 | 0.30 | 2 | 218 | 58 |
| | 24 | 0 | 0 | 157 | 41 |

As shown in Table 2 above, it was found out that the amount of residual tin can be reduced sufficiently while maintaining the molecular weight in the presence of lactic acid at any of the concentrations. As shown in Table 2, it also was found that, as the concentration of lactic acid becomes relatively high, a removal ratio of residual tin (100-residual ratio) becomes relatively great as compared with a decreasing ratio of Mw (100-retention ratio). Furthermore, by comparing the results at the respective lactic acid concentrations when the immersing time was 2 hours, it was found out that residual tin can be removed efficiently in a relatively short time as the concentration of lactic acid in the catalyst removal solvent becomes relatively high. As above, according to the method of the present example, the amount of residual tin can be reduced in a short time. Thus, a reduction in molecular weight can be suppressed sufficiently.

### [Example 2]

From a P(LA/CL) containing a large amount of residual tin derived from a catalyst, residual tin was removed using lactic acid-containing IPA as a catalyst removal solvent.

A raw material molar ratio (A : B) between lactide (A) and caprolactone (B) was set to 68 : 32, a P(LA/CL) was prepared using the raw materials. The amount of the residual catalyst in the P(LA/CL) was 100 ppm by mol (the amount of residual tin was 113.2 ppm by weight), and the molecular weight (Mw) of the P(LA/CL) was 451,000. This P(LA/CL) was processed into particles having a particle diameter of about 0.5 mm by grinding. 2g of this particulate P(LA/CL) was introduced into 20 mL of a catalyst removal solvent, and then the resultant mixture was stirred for 1 hour at 40°C. As the catalyst removal solvent, IPAs containing lactic acid at predetermined concentrations (2.4 and 3.6 mol/L), respectively, were used. The ratio (v/w) of each of the catalyst removal solvents to the P(LA/CL) was 10. While the polymer was immersed in the solvent, the solvent was exchanged every 1 hour, and the immersion was repeated a total of 1 to 4 times. The particulate P(LA/CL) after being subjected to the immersion was dried under reduced pressure for 12 hours at 70°C so as to remove the solvent in the P(LA/CL). The purified P(LA/CL) thus obtained was subjected to a quantitative determination of residual tin and a measurement of molecular weight. These results will be shown in Table 3 below.

**[Table 3]**

| <2.4 mol/L lactic acid> | | |
|---|---|---|
| Immersing time | Residual tin (ppm by weight) | Molecular weight-retention ratio (%) |
| 0 | 113.2 | 100 |
| 1 hr × 1 time | 9.06 | 96 |
| 1 hr × 2 times | 2.51 | 86 |
| 1 hr × 3 times | 1.40 | 82 |
| 1 hr × 4 times | 1.70 | 79 |

| <3.6 mol/L lactic acid> | | |
|---|---|---|
| Immersing time | Residual tin (ppm by weight) | Molecular weight-retention ratio (%) |
| 0 | 113.2 | 100 |
| 1 hr × 1 time | 4.37 | 87 |
| 1 hr × 2 times | 1.21 | 79 |
| 1 hr × 3 times | 1.56 | 75 |
| 1 hr × 4 times | 0.60 | 79 |

As shown in Table 3 above, it was found out that even though the P(LA/CL) contains a large amount of residual tin, the residual tin can be reduced to a sufficiently low level by subjecting a catalyst removal solvent containing lactic acid to an immersing treatment, while retaining the molecular weight sufficiently. Further, it was found out that the residual tin can be removed more efficiently by exchanging the catalyst removal solvent in the immersion.

As above, according to the present invention, even though residual tin is contained in a P(LA/CL) at extremely high concentration, the residual tin can be removed efficiently. Thus, the amount of residual tin in a P(LA/CL) before a purifying treatment is not a particular problem, for example. Therefore, the polymerization time can be shorten by increasing the amount of a catalyst used in a synthesis of a P(LA/CL). Therefore, conditions of the synthesis of a P(LA/CL) can be made less stringent according to the present invention, and thus further efficient synthesis can be realized.

### [Example 3]

A raw material molar ratio (A : B) between lactide (A) and caprolactone (B) was set to 64.7 : 35.3, and a P(LA/CL) was prepared using the raw materials. The molecular weight (Mw) of the P(LA/CL) was 176,000, the amount of residual tin in the P(LA/CL) was 87.1 ppm by weight, the amount of residual lactide in the same was 1.04% by weight, and the amount of residual caprolactone in the same was 2.36% by weight. This P(LA/CL) was processed into particles having a particle diameter of about 1 mm by grinding. A column having a diameter of 2 cm × a length of 10 cm was filled with 12g of this particulate P(LA/CL), a catalyst removal solvent at 40°C was flowed through the column at a flow rate of 10.5 ml/min for 6 minutes, and thereafter, the solvent was circulated for 24 minutes. As the catalyst removal solvent, IPA containing 2.4 mol/L (20%) lactic acid was used. This was repeated a total of 6 times. Then, IPA containing no lactic acid at 40°C as a monomer removal solvent was flowed through the column at a flow rate of 16 ml/ min for 4 minutes, and thereafter, the solvent was circulated for 56 minutes. This was repeated a total of 6 times. The obtained P(LA/CL) was dried under reduced pressure for 12 hours at 70°C, and thus the solvent in the P(LA/CL) was removed. The purified P(LA/CL) thus obtained was subjected to quantitative determinations of residual tin, residual lactide, and residual caprolactone and a measurement of molecular weight.

The result showed that the obtained polymer had 0.018 ppm by weight of residual lactide, 0.0017 ppm by weight of residual caprolactone, and 6.5 ppm by weight of residual tin. As above, also by filling a column with a P(LA/CL) and circulating each of the various solvents, the amounts of residual tin, residual lactide, and residual caprolactone can be reduced sufficiently while suppressing a reduction in molecular weight.

### [Example 4]

A treatment for purifying a P(LA/CL) was carried out using IPA containing each of various organic acids, and a change in amount of residual tin and a change in molecular weight were examined.

A raw material molar ratio (A : B) of lactide (A) to caprolactone (B) was set to 60 : 40, a P(LA/CL) was prepared using the raw materials. The amount of residual tin in the P(LA/CL) was 20 ppm by weight, and the molecular weight (Mw) of the P(LA/CL) was 210,000. This P(LA/CL) was processed into particles having a particle diameter of about 1 mm by grinding. 3g of this parculate P(LA/CL) was introduced into IPA containing each of the various acids, and the resultant mixture was stirred for 24 hours at 40°C. The ratio (v/w) of the solvent to P(LA/CL) was 10. The particulate P(LA/CL) after being subjected to the immersion was dried under reduced pressure for 12 hours at 70°C, and thus the solvent in the P(LA/CL) was removed. The purified P(LA/CL) thus obtained was subjected to a quantitative determination of residual tin and a measurement of molecular weight. As to the tin, the ratio (residual ratio) % thereof was determined assuming that an amount of residual tin in an unpurified P(LA/CL) was 100%. As to the molecular weight, assuming that the molecular weight (Mw0) of an unpurified P(LA/CL) was 100%, the retention ratio thereof (100 × Mw/Mw0 %) was determined. These results will be shown in Table 4 below.

**[Table 4]**

| Organic acid | pKa | Molecular weight-retention ratio (%) | Tin residual ratio (%) |
|---|---|---|---|
| Unpurified | - | 100 | 100 |
| Hydrochloric acid | < 0 | 11 | 5 |
| Trichloroacetic acid | 0.46 | 28 | 57 |
| Dichloroacetic acid | 1.30 | 54 | 44 |
| Salicylic acid | 2.78 | 81 | 74 |
| Phosphoric acid | 1.83 | 68 | 112 |
| Benzoic acid | 4.00 | 87 | 94 |
| Acetic acid | 4.76 | 99 | 99 |
| Propionic acid | 4.62 | 96 | 102 |
| Pyruvic acid | 2.34 | 81 | 53 |
| Citric acid | 2.90 | 70 | 42 |
| Malic acid | 3.23 | 98 | 59 |
| Lactic acid | 3.64 | 92 | 24 |
| Glycolic acid | 3.65 | 97 | 32 |

As shown in Table 4 above, in the example using hydrochloric acid, residual tin was reduced sufficiently, however a significant reduction in molecular weight was observed. In the cases using trichloroacetic acid and dichloroacetic acid, respectively, residual tin was reduced, however a significant reduction in molecular weight was recognized. In the cases using phosphoric acid that is an inorganic acid and salicylic acid, respectively, a significant reduction in molecular weight did not occur, however a sufficient reduction in residual tin, which was intended, did not occur. In the cases using benzoic acid, acetic acid, and propionic acid that are organic acids and have a pKa of more than 3.9, respectively, the molecular weight was not reduced, however residual tin was not reduced sufficiently. On the other hand, in the examples using pyruvic acid, citric acid, malic acid, and lactic acid that are organic acids and have a pKa in the range of 2 to 3.9, respectively, residual tin was reduced sufficiently while the molecular weight was retained.

### Industrial Applicability

As above, according to the purifying method of the present invention, a residual catalyst in a polymer can be reduced effectively while a reduction in molecular weight of the polymer is suppressed. Thus, influences of the residual catalyst on human bodies and environment can be suppressed, and safety of the polymer used especially in a medical field can be improved sufficiently.

## Claims

1. A method for purifying a polymer containing a residual catalyst, comprising the step of:
removing a catalyst by bringing the polymer into contact with a catalyst removal solvent containing an organic solvent that contains an organic acid, wherein
the organic acid has a pKa in a range of 2 to 3.9.

2. The purifying method according to claim 1, wherein the organic acid is α-hydroxy monocarboxylic acid.

3. The purifying method according to claim 2, wherein the α-hydroxy monocarboxylic acid is at least one of lactic acid and glycolic acid.

4. The purifying method according to claim 1, wherein the organic acid is at least one selected from the group consisting of pyruvic acid, citric acid, and malic acid.

5. The purifying method according to claim 1, wherein a temperature in the catalyst-removing step is in a range of 30 °C to 55 °C.

6. The purifying method according to claim 1, wherein a temperature in the catalyst-removing step is in a range of 35 °C to 55 °C.

7. The purifying method according to claim 1, wherein a ratio (v/w) of the catalyst removal solvent to the polymer is 2 or more.

8. The purifying method according to claim 1, wherein a concentration of the organic acid in the catalyst removal solvent is in a range of 0.5 to 4 mol/L.

9. The purifying method according to claim 1, wherein in the catalyst-removing step, a contact time between the polymer and the catalyst removal solvent is in a range of 1 to 24 hours.

10. The purifying method according to claim 1, wherein the polymer is a particulate polymer.

11. The purifying method according to claim 10, wherein a particle diameter of the particulate polymer is 1 mm or less.

12. The purifying method according to claim 1, wherein the organic solvent is at least one selected from the group consisting of isopropyl alcohol, ethanol, methanol, butanol, hexanol, octanol, diethyl ether, t-butyl methyl ether, ethyl acetate, acetone, methyl ethyl ketone, hexane, and heptane.

13. The purifying method according to claim 1, wherein the polymer is a biodegradable polymer.

14. The purifying method according to claim 1, wherein the polymer is polyester.

15. The purifying method according to claim 1, wherein the polymer is obtained from at least one raw material selected from the group consisting of lactic acid, glycolic acid, trimethylene carbonate, ε-caprolactone, γ-butyrolactone, δ-valerolactone, and p-dioxanon.

16. The purifying method according to claim 15, wherein the polymer is a copolymer of lactic acid and caprolactone.

17. The purifying method according to claim 1, wherein the catalyst is a metal or a metal compound.

18. The purifying method according to claim 1, wherein the metal is at least one selected from the group consisting of tin, titanium, zinc, zirconium, antimony, and iron.

19. The purifying method according to claim 1, wherein the contact between the polymer and the solvent is achieved by immersing the polymer in the solvent.

20. A method for producing a polymer, comprising the step of
purifying a polymer, wherein
in the purifying step, the polymer is purified by the purifying method according to claim 1.
